# FASCICULE DE BREVET EUROPEEN

(11) **EP 0 530 426 B1**
(45) Date de publication et mention de la délivrance du brevet: **07.07.1993**
(21) Numéro de dépôt: 91810695.6
(22) Date de dépôt: 02.09.1991
(51) Int. Cl.: B65G 47/90, B65G 61/00

(54) **Pince de saisie et de transfert**
Greif- und Übertragungszange
Grasping and transfer gripper

(43) Date de publication de la demande: 10.03.1993
(73) Titulaire: FABRIQUES DE TABAC REUNIES S.A., 2003 Neuchâtel-Serrières (CH)
(72) Inventeur: Berger, Maurice, CH-2016 Cortaillod (CH); Cestonaro, Jean, CH-2074 Marin (CH)
(74) Mandataire: Fischer, Franz Josef

(56) Documents cités:
- EP-A- 0 071 864
- EP-A- 0 377 399
- GB-A- 2 205 300
- US-A- 4 787 810

## Description

La présente invention concerne une pince prévue pour saisir de manière automatique un objet depuis une position et le transférer vers une autre position où il est relâché; cette pince est tout spécialement adaptée pour saisir et transférer des objets se présentant sous la forme d'un empilage d'objets individuels plats comme par exemple un empilage d'ébauches ou d'étiquettes destinées à alimenter une machine d'empaquetage. Une pluralité de pinces selon l'invention, montées côte-à-côte sur un dispositif de manutention, sont particulièrement aptes à saisir simultanément toute une rangée de piles d'étiquettes disposée sur une palette et à transférer cette rangée de piles en une seule opération et de manière entièrement automatique vers une machine d'empaquetage, en particulier mais non exclusivement, une machine d'empaquetage de produits de l'industrie du tabac et plus particulièrement de cigarettes.

Un dépalettiseur pour paquets d'étiquettes a été décrit en détail dans la demande de brevet suisse 3014/88, correspondant au brevet EP-0.354.873 et au brevet US-A-4.993.915. Le dépalettiseur décrit comprend tous les éléments permettant d'alimenter une machine d'empaquetage à partir d'une palette chargée de piles d'étiquettes disposées en plusieurs couches de plusieurs rangées. La présente invention est une amélioration importante apportée aux pinces faisant partie du dispositif, permettant la saisie et le transfert de chaque pile d'étiquettes; en effet la pince correspondante décrite dans les documents susmentionnés ne fonctionne correctement que lorsque les piles d'étiquettes sont parfaitement arrangées sur la palette et que les feuilles de carton disposées entre chaque couche sont parfaitement disposées selon les prescriptions et ne présentent aucun pli et aucune déchirure sur leur arête frontale. Ce cas étant très rare lors de l'exploitation industrielle du dispositif, il a été nécessaire de développer une nouvelle pince pouvant s'accomoder de cette situation imparfaite.

Un autre dispositif a été décrit dans US-A-4.787.810; l'action de cette pince est différente de celle de l'invention puisqu'alors les piles d'étiquettes sont à saisir sur un convoyeur, c'est-à-dire sur un élément dont la surface d'appui est rigide, ne présentant pas la même élasticité que les piles d'étiquettes des couches inférieures disposées sur une palette. Pour ceci, la forme des griffes venant saisir les piles est adaptée à la forme de la surface supérieure du tapis de convoyage, faisant que seul un mouvement latéral de la pince est nécessaire pour la saisie de la pile.

GB-A-2.205.300 montre une pince dont la position angulaire de la lame de prise est fixe, seule l'élasticité de cette lame permettant un léger ajustage; de ce fait, lors de la prise de la pile, il est nécessaire d'appuyer fortement la lame sur la surface supérieure de la feuille intercalaire, ce qui peut amener à une détérioration de cette feuille, respectivement de l'étiquette supérieure de la pile inférieure, lors de l'avance de la lame entre les piles. La pince décrite ici ne comporte en outre pas de moyens permettant l'extraction de la pile hors de la pince sans déranger l'alignement des étiquettes de la pile.

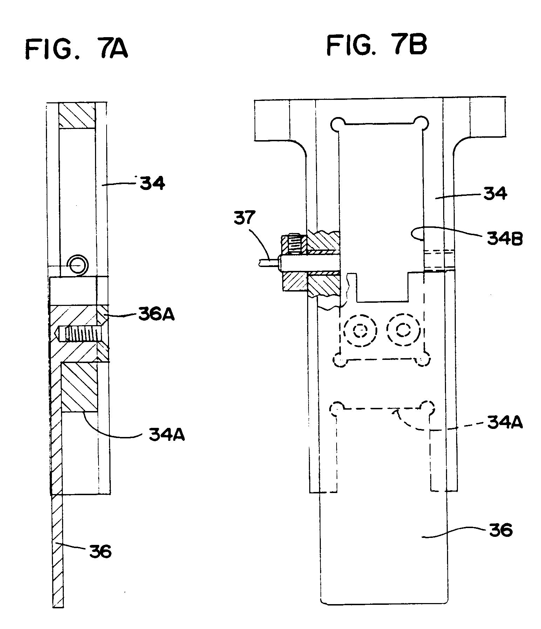

EP-A-0.071.864 décrit un système où les étiquettes sont assez fortement pressées avant que les griffes de la pince soient introduites dans la pile; de ce fait on ne peut garantir que la pile comportera toujours le même nombre d'étiquettes. L'entrée des griffes à l'intérieur de la pile est relativement brutale (fig. 7), nécessitant une forme adaptée de l'extrémité des griffes, mais pouvant causer néanmoins une détérioration de quelques étiquettes de la pile. Le mode d'entrée des griffes dans la pile nécessite un appui arrière de cette pile, ce qui empêche la saisie des piles de la dernière rangée d'une couche. Le système décrit ne comporte lui aussi aucun moyen d'extraction des piles hors des pinces.

Un premier but de la pince selon l'invention est donc de pouvoir saisir automatiquement, de manière fiable, un objet ou plus particulièrement une pile d'étiquettes disposée sur une palette, et de transférer cet objet puis de le relâcher sur les organes d'entrée d'une machine d'empaquetage, ceci sans endommager ledit objet, respectivement aucune desdites étiquettes.

Un deuxième but de la pince selon l'invention est, en juxtaposant une pluralité desdites pinces côte-à-côte, de pouvoir saisir, transférer et relâcher une rangée complète de piles d'étiquettes.

Un autre but de l'invention est d'obtenir un fonctionnement automatique parfaitement fiable desdites pinces même si l'arrangement des piles dans la rangée n'est pas parfait ou même si la feuille de carton intercalaire n'est pas disposée correctement ou présente des plis ou des déchirures sur son arête frontale.

Encore un autre but de la pince selon l'invention est de pouvoir être installée sur un dépalettiseur pour paquets d'étiquettes.

Afin d'atteindre les buts mentionnés, la pince de saisie et de transfert selon l'invention comprend les caractéristiques mentionnées dans les revendications.

Pour mieux en comprendre la construction et le fonctionnement, on peut se référer au dessin en annexe avec les figures où:
la figure 1 représente une vue en perspective schématique et simplifiée d'un dépalettiseur muni d'un jeu de pinces selon l'invention,
la figure 2A est une vue de côté à plus grande échelle d'une forme d'exécution préférentielle d'une pince prête à saisir une pile d'étiquettes,
la figure 2B est une vue partielle depuis l'arrière montrant le fonctionnement des plaques d'appui arrières verticales,
la figure 3 est une vue de côté d'une pince en cours de saisie d'une pile d'étiquettes,
la figure 4 est une vue de côté d'une pince ayant saisi une pile d'étiquettes,
la figure 5 est une vue de côté d'une pince venant s'aligner sur la première rangée de piles d'étiquettes,
la figure 6 est une vue de côté d'une pince après décalage de la couche de rangées de piles d'étiquettes, et
la figure 7A est une vue en coupe partielle de côté alors que la figure 7B est une vue par l'avant d'un détail de l'assemblage du racleur sur la plaque d'appui arrière.

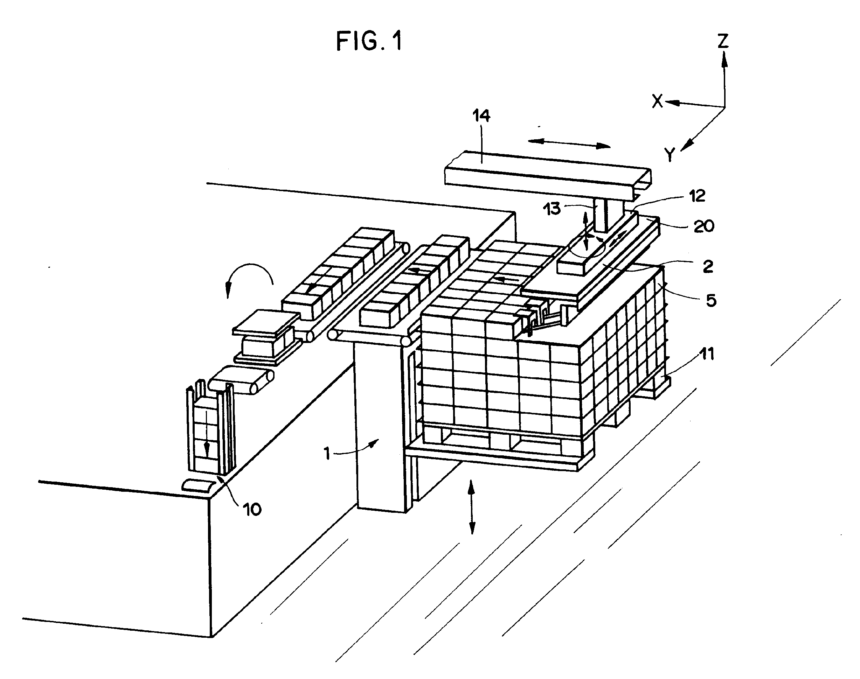

A la figure 1 on a une vue schématique d'un dépalettiseur 1, chargé d'alimenter une machine d'empaquetage 10, à partir d'une palette 11 chargée de piles d'étiquettes 5 disposées selon un certain nombre de couches, chacune d'entre elles étant formée d'un certain nombre de rangées de piles d'étiquettes. Le fonctionnement général du dépalettiseur ainsi que les différents organes qui le constituent sont décrits dans les brevets susmentionnés, une nouvelle description n'en sera donc pas faite ici.

La présente invention concerne le dispositif de pinces 2, suspendu à un support 20, lui-même fixé à un chariot 12 apte à se déplacer selon les axes Y et Z, le chariot 12 étant fixé à un autre chariot 13, apte à se déplacer selon l'axe X dans une glissière 14. Le support 20 est fixé au chariot 12 de manière à pouvoir pivoter autour de l'axe vertical Z. Ces différents modes de déplacement ont aussi été décrits dans les brevets susmentionnés.

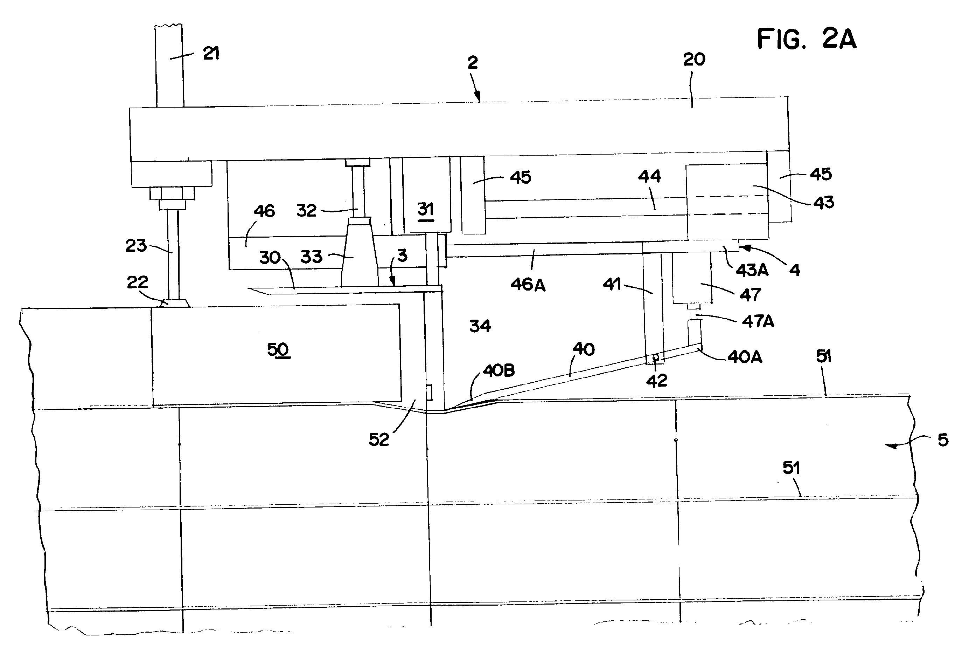

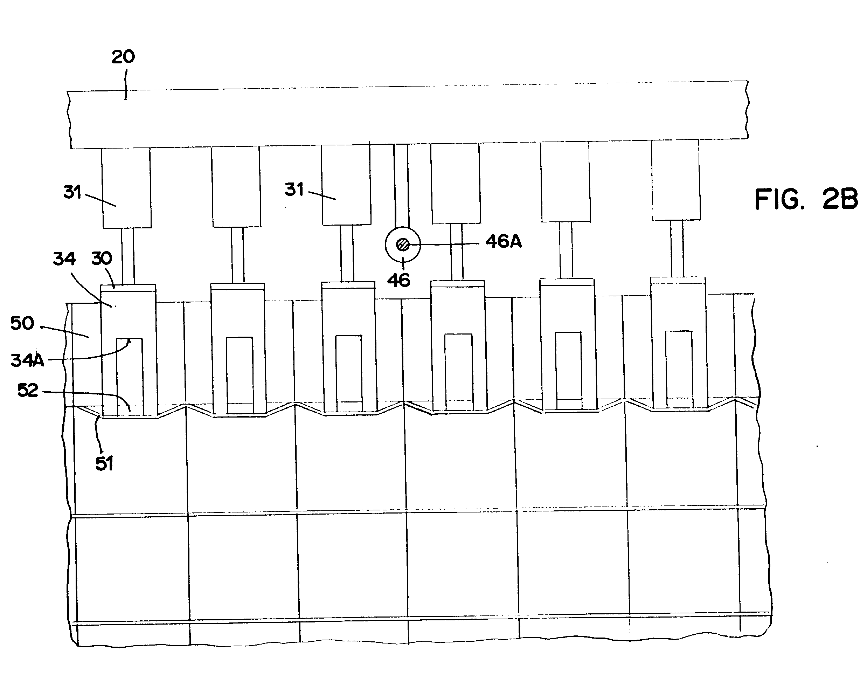

La figure 2A montre une forme d'exécution préférentielle d'une pince selon l'invention vue de côté lorsqu'elle se prépare à saisir une pile d'étiquettes 50. Le dispositif de pince 2 est composé du support 20, au-dessous duquel sont suspendues une partie avant 3 de pince et une partie arrière 4 de pince.

La partie avant 3 de pince est constituée d'une plaque d'appui supérieure horizontale 30, constituée de préférence d'une plaque métallique mince, dont la largeur est légèrement inférieure à la largeur d'une pile d'étiquettes, et s'étendant en direction de la pile 50 à saisir. La plaque d'appui supérieure 30 peut se déplacer verticalement sous l'action d'un entraînement constitué de préférence d'un vérin pneumatique à double effet 31, le mouvement de la plaque 30 étant guidé par une tige de guidage 32, fixée perpendiculairement au support 20 et coulissant dans un guidage 33. Sur la partie arrière de la plaque 30, une plaque d'appui arrière verticale 34 est fixée perpendiculairement à la plaque 30 et s'étend en direction du bas.

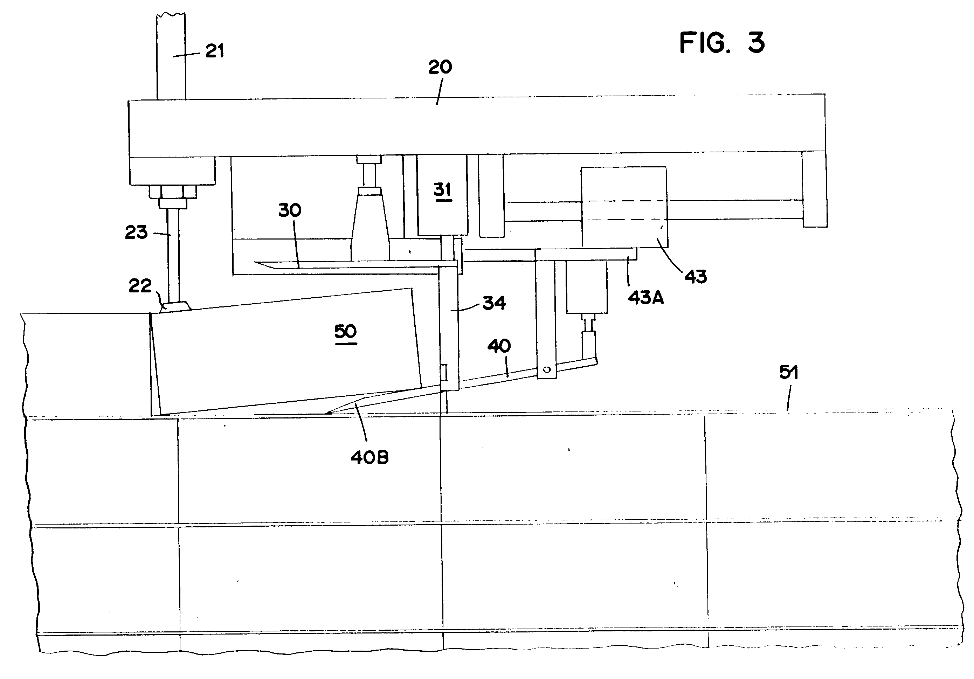

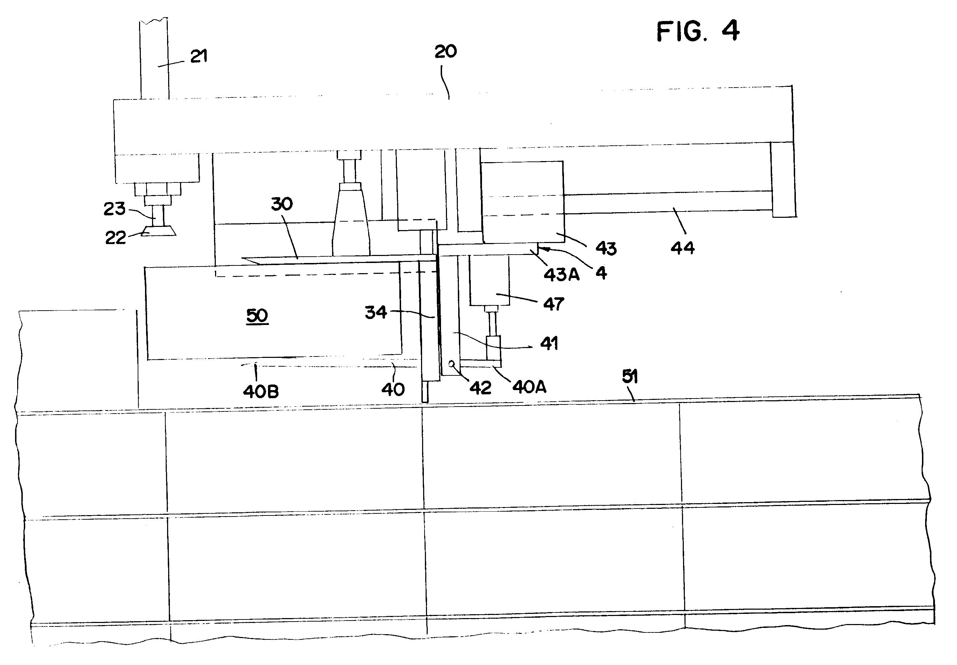

La partie arrière 4 de pince est disposée derrière la plaque d'appui verticale 34; elle comprend une plaque d'appui inférieure 40, constituée de préférence d'une lame métallique mince et relativement étroite, suspendue à un étrier 41 et pouvant pivoter autour d'un axe horizontal 42 fixé au bas de l'étrier 41. Cet étrier 42 est lui-même fixé à un chariot 43, pouvant coulisser selon l'axe X, le long d'une glissière 44 fixée horizontalement par les appuis 45 sous le support 20. Vu qu'une pluralité desdites pinces 2 sont fixées côte-à-côte sous le support 20, chacun des chariots 43 est relié à son voisin par une plaque d'entraînement 43A qui s'étend donc sur toute la largeur du dispositif. A mi-largeur du dispositif, soit au milieu de la plaque d'entraînement 43A, celle-ci est fixée à une tige 46A d'un entraînement constitué de préférence d'un vérin pneumatique à double effet 46 dont le corps est fixé au support 20. Ainsi, en actionnant le vérin 46, il est possible de faire reculer, comme représenté à la figure 2A ou avancer, comme représenté aux figures 3 et 4, l'ensemble des parties arrières 4 de toutes les pinces. Il est évident qu'au lieu d'un seul vérin 46, il est aussi possible d'en disposer plusieurs régulièrement espacés sur toute la largeur du dispositif, de même que pour une exécution du dispositif ne comportant qu'une seule pince, on pourra avoir deux vérins 46 disposés de part et d'autre du vérin 31 commandant l'élévation ou l'abaissement de la lame d'appui supérieure 30.

Un autre entraînement constitué aussi de préférence d'un vérin pneumatique à double effet 47 est fixé au chariot 43, agissant par l'intermédiaire d'une tige 47A sur l'extrémité de la partie postérieure 40A de la plaque d'appui inférieure 40, afin de pouvoir élever ou abaisser l'extrémité avant de la partie antérieure 40B de la même plaque en la faisant pivoter autour de l'axe 42 fixé à l'étrier 41.

Encore un autre vérin pneumatique à double effet 21 est aussi fixé au support 20, à l'avant du dispositif, l'extrémité 22 de la tige du piston 23 du vérin 21 pouvant venir appuyer la partie avant de la pile à saisir 50.

Tous les entraînements mentionnés ci-dessus sont réalisés de préférence par des vérins pneumatiques à double effet; le même type d'entraînement peut aussi être réalisé avec d'autres types de vérins ou alors certains ou tous lesdits entraînements peuvent être réalisés par des entraînements motorisés.

L'opération de préparation de saisie de la pile 50 par le dispositif de pince 2 est aussi visible sur la figure 2A; on remarque tout d'abord que la pile 50 à saisir, respectivement la rangée de piles à saisir, située sur la couche supérieure de la palette d'étiquettes 5, est légèrement décalée vers l'avant par rapport aux rangées de piles des couches inférieures, pour une raison et d'une manière qui seront décrites plus loin. De manière conventionnelle, chaque couche de rangées de piles est séparée de la suivante par une feuille de carton intercalaire 51.

La position du support 20 relativement à la palette d'étiquettes 5, respectivement à la rangée de piles 50 à saisir, a déjà été ajustée selon les axes X, Y et Z par les mêmes moyens que décrits dans les brevets mentionnés précédemment. La description ci-dessous est faite pour une seule pince en fonctionnement, étant bien entendu que les autres pinces agissent de la même manière sur les piles situées dans la même rangée que la pile d'étiquettes 50. L'extrémité 22 de la tige de piston 23 se trouve alignée à proximité de l'extrémité avant de la pile 50; elle est abaissée, par l'action du vérin 21, afin de fermement maintenir la pile 50. En même temps, le vérin 31 est actionné pour abaisser la plaque d'appui arrière 34, respectivement la plaque d'appui supérieure 30, de manière à ce que l'extrémité du bas de la plaque 34 appuie fortement sur la feuille de carton intercalaire 51 ainsi que sur les couches inférieures. De cette façon, un léger enfoncement 52 est créé, par l'écrasement de la feuille de carton 51 ainsi que par compression des couches inférieures, juste sous l'arrière de la pile 50. A la figure 2B, on a une vue prise juste depuis derrière les plaques d'appui arrières verticales 34, le reste du dispositif de la pince n'étant pas représenté afin de ne pas surcharger la figure, sauf le vérin 46 dont la position au centre du dispositif est indiquée. On voit sur cette figure que chaque plaque d'appui arrière 34 comprend une encoche 34A par laquelle l'extrémité avant 40B de la plaque d'appui inférieure 40 pourra se glisser, comme on voit l'amorce de ce mouvement à la figure 2A. Les figure 2A et 2B montrent bien que grâce à l'enfoncement 52 et à l'espace ainsi libéré, l'extrémité avant 40B de la plaque 40 pourra venir se glisser sous la pile 50 afin de la saisir. Sur ces figures, l'enfoncement 52 a été légèrement exagéré afin de mieux comprendre le fonctionnement du dispositif.

Une phase ultérieure de cette opération de saisie est visible à la figure 3, où l'on voit que le chariot 43, respectivement l'extrémité avant 40B de la plaque d'appui 40 s'est légèrement avancée sous la pile 50, la faisant pivoter, par glissement de l'arête arrière inférieure de la pile 50 par dessus la face supérieure de la plaque d'appui 40, autour d'un point fixe situé à l'avant de la pile 50 et correspondant au point d'appui de l'extrémité 22 de la tige de piston 23 du vérin 21. La plaque d'appui arrière 34, respectivement la plaque d'appui supérieure 30 ont été relevées par l'action du vérin 31, afin de laisser la place nécessaire au mouvement de pivotement de la pile 50.

La figure 4 montre que la pile 50 a été complètement saisie, pour ceci l'extrémité 22 de la tige 23 du piston du vérin 21 a été complètement relevée, alors qu'après que le chariot 43 ait complètement avancé selon la direction X, faisant que l'extrémité avant 40B de la plaque d'appui inférieure 40 se soit complètement glissée sous la pile 50, le vérin 47 a été actionné afin d'abaisser l'extrémité arrière 40A de la plaque 40, respectivement de faire pivoter cette plaque 40 autour de son axe 42 afin que la face supérieure de la portion avant de la plaque 40 presse la pile 50 contre la face inférieure de la plaque d'appui supérieure 30. On remarque que le pivotement de la plaque d'appui inférieure 40 est tel qu'elle a dépassé l'horizontale et qu'elle presse la pile 50 selon un certain angle. Le support 20 peut maintenant être élevé selon l'axe Z, pour passer par dessus les rangées d'étiquettes restantes, puis déplacé selon l'axe X, par les moyens décrits dans les brevets susmentionnés, afin de transférer la pile 50, respectivement la rangée de piles vers les organes d'évacuation qui emmènent ces piles vers la machine d'empaquetage. Le relâchement de la pile 50 sur lesdits organes d'évacuation se fait par un léger desserrage de la pince et un retrait du chariot 43, respectivement de la partie arrière 4 de la pince.

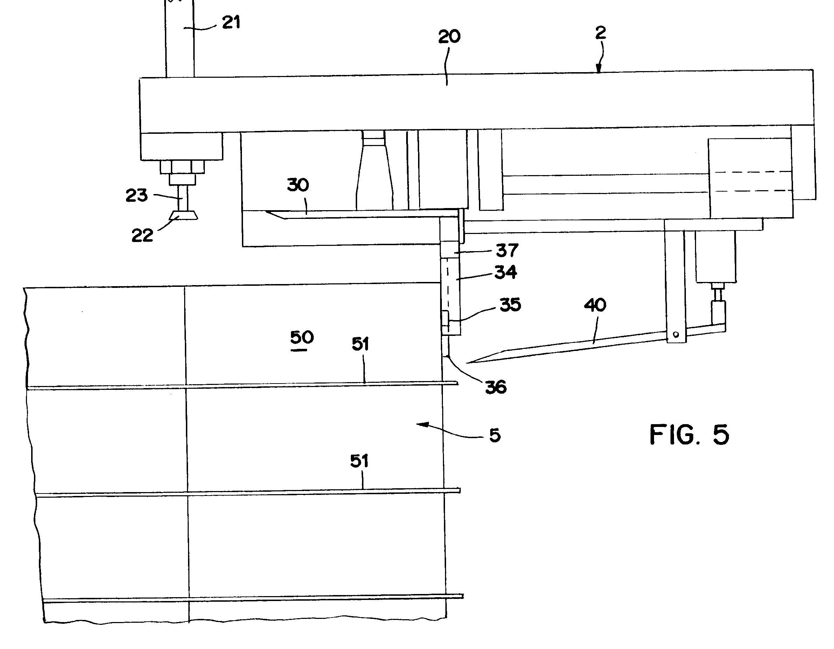

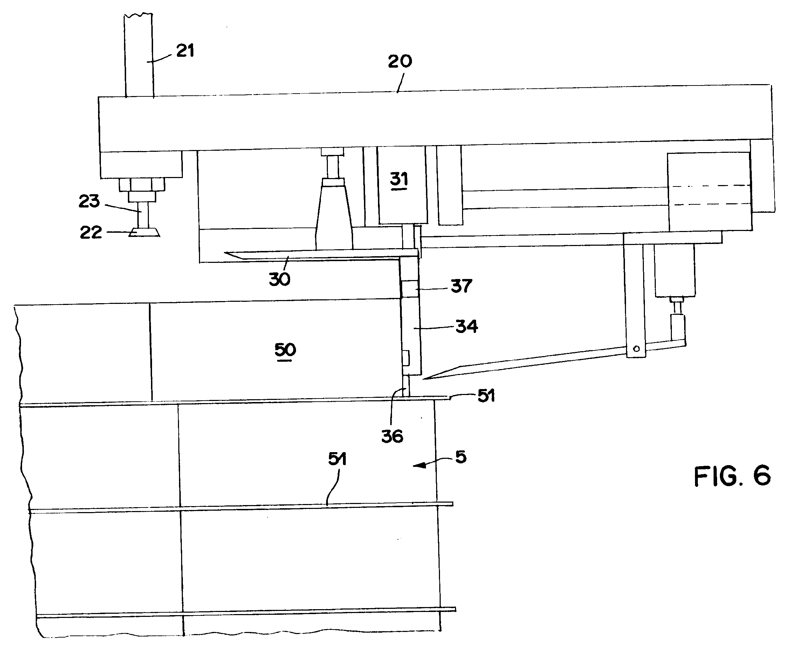

On a vu plus haut que la réussite de l'opération automatique de saisie dépend essentiellement de la possibilité de créer l'enfoncement 52 afin que l'extrémité avant 40B de la plaque d'appui 40 puisse venir se glisser sous la pile 50. Il est généralement difficile, voir impossible, de créer cet enfoncement lorsque la pile à saisir fait partie de la première rangée de piles de la palette. Cette situation est représentée à la figure 5. On y voit que la palette 5 est constituée de plusieurs couches superposées, chacune des couches étant séparée de la suivante par la feuille de carton intercalaire 51. Il est évident que les rangées sont assez exactement alignées les unes au-dessus des autres. Chaque feuille de carton 51 dépassant légèrement des faces de la palette 5, il est fort probable que les arêtes de ces feuilles sont légèrement endommagées par la manutention de la palette, respectivement comportent des déchirures ou des plis, ce qui empêche la création de l'enfoncement 52 et/ou le glissement de la plaque d'appui inférieure 40 sous la pile 50. Pour ceci, et lorsque le système automatique de commande du dépalettiseur a détecté que la rangée à saisir est la première de la couche, deux opérations supplémentaires, visibles aux figures 5 et 6, sont commandées.

A la figure 5 on voit que la palette 5 a été élevée de manière à ce que sa couche supérieure se trouve à hauteur pour être prise par le dispositif de pince 2; durant cette opération le support 20 était complètement retiré en arrière afin de pas risquer de collision entre la couche supérieure et la plaque d'appui arrière 34. Puis le support 20 est lentement déplacé selon l'axe X, jusqu'à ce qu'un palpeur de contact 35, de préférence un détecteur de proximité, de l'une quelconque des plaques d'appui arrières 34 entre en contact avec une pile 50. En effet, il est assez probable que la palette 5 ne soit pas exactement axée par rapport à la machine; afin d'éliminer cette erreur d'axe, le support 20 est ensuite avancé très lentement de façon à ce que les pinces s'alignent par rapport à la palette, de par la rotation possible du support 20 par rapport au chariot 12. Ce mouvement d'avance/alignement est stoppé lorsque tous les palpeurs 35 des plaques d'appui 34 ont été actionnés, respectivement sont entrés en contact avec la pile d'étiquettes qui leur font face. Le support 20 est ensuite réglé en position selon l'axe Y, grâce à des palpeurs (non représentés), afin que chaque pince soit exactement centrée sur la pile 50 qu'elle aura à saisir. On remarque encore sur la figure 5 un racleur 36, constitué d'une plaque pouvant coulisser librement en face de la plaque d'appui arrière 34 et dont la position relative par rapport à la plaque 34 est mesurée par un capteur 37 pouvant être d'un type quelconque connu de la technique. Durant cette opération d'alignement le racleur 36 pend librement sous la plaque 34, une hauteur libre subsistant entre l'extrémité du bas du racleur et la feuille de carton intercalaire 51 située sous la couche supérieure.

A la figure 6, on voit que la plaque d'appui arrière 34 a été descendue, par le vérin 31, de manière à ce que le racleur 36 soit en contact et appuie légèrement sur la feuille de carton 51; la commande d'arrêt de la descente de la plaque 34 est donnée par le capteur 37 détectant la position du racleur 36. A ce moment, puisque l'ensemble des dispositifs de pinces a été aligné comme expliqué plus haut, et puisque le racleur 36 appuie sur la feuille de carton 51, il est possible, par un mouvement selon l'axe X du support 20, de repousser toute la couche supérieure d'une distance adéquate, par exemple 10 à 15 mm, pour qu'une assise suffisante soit créée pour permettre la formation des enfoncements 52 en face de la première rangée de piles, lors de l'opération décrite plus haut. Durant ces opérations d'alignement et de repoussage de la couche supérieure, l'extrémité 22 de la tige 23 du piston d'appui 21 ainsi que la plaque d'appui inférieure 40 sont entièrement retirés.

Les figures 7A et 7B montrent respectivement une coupe partielle par le côté et une vue de devant de la plaque d'appui arrière 34 et du racleur 36. Le racleur 36 peut coulisser librement le long de la plaque d'appui arrière 34, étant maintenu sur la face avant de cette dernière par un tenon 36A coulissant le long d'une creusure 34B aménagée dans la plaque 34. D'autres formes d'exécution de ce dispositif particulier peuvent évidemment être envisagées.

La pince de saisie et de transfert selon l'invention, montée sur un dispositif de manutention quelconque, particulièrement sur un dépalettiseur d'étiquettes, est donc apte à saisir et transférer une pile ou une rangée de piles d'étiquettes depuis n'importe quelle rangée d'une couche quelconque de piles d'étiquettes disposées sur une palette, vers l'entrée d'une machine d'empaquetage, ceci de manière entièrement automatique, étant commandée par les organes de commande ainsi que les détecteurs de position propres au dépalettiseur. La pince selon l'invention a été décrite comme s'appliquant à la saisie et au transfert de piles d'étiquettes ou d'ébauches destinées à l'emballage de produits de l'industrie du tabac et particulièrement de cigarettes, mais il est bien entendu qu'elle peut tout aussi bien s'appliquer à saisir et transférer tout autre objet se présentant d'une manière similaire, étant utilisée seule pour saisir un objet individuel ou en ligne comme décrit ici pour saisir simultanément toute une rangée d'objets.

## Revendications

1. Pince de saisie et de transfert (2) destinée à être montée sur un dispositif de manutention (1) d'objets (50), comprenant un premier élément de support (20) fixé à un chariot mobile (12) dudit dispositif de manutention, une partie avant (3) et une partie arrière (4) de pince étant fixées audit premier élément support, caractérisée en ce que la partie avant de pince comprend une plaque d'appui supérieure horizontale (30), s'étendant en direction de l'objet à saisir (50), une plaque d'appui arrière verticale (34), fixée perpendiculairement à la partie arrière de ladite plaque d'appui supérieure horizontale et s'étendant vers le bas de l'objet à saisir, lesdites plaques d'appui supérieure horizontale et arrière verticale étant mobiles selon la direction verticale (axe Z), étant montées sur un premier dispositif d'actionnement (31) dont l'enveloppe est fixée audit premier élément de support, la partie arrière de pince comprenant une glissière (44) orientée en direction de l'objet à saisir (axe X), fixée audit premier élément de support en arrière dudit premier dispositif d'actionnement, un deuxième élément de support (43) coulissant le long de ladite glissière sous l'action d'un deuxième dispositif d'actionnement (46) dont l'enveloppe est fixée audit premier élément de support, une plaque d'appui inférieure (40), comprenant une portion antérieure (40B) s'étendant en direction de l'objet à saisir et une portion postérieure (40A) dans le prolongement de ladite portion antérieure, ladite plaque d'appui inférieure étant montée sur un axe de pivotement horizontal (42) disposé entre lesdites portions antérieure et postérieure, ledit axe horizontal étant fixé à un étrier (41) disposé verticalement et fixé audit deuxième élément de support, l'enveloppe d'un troisième dispositif d'actionnement (47) étant fixée audit deuxième élément de support en arrière dudit étrier, ledit troisième dispositif d'actionnement agissant sur ladite portion postérieure de la plaque d'appui inférieure afin de la faire pivoter autour dudit axe horizontal et de lui faire prendre une position quasi-horizontale ou une position plus inclinée, ledit deuxième dispositif d'actionnement (46) permettant de faire prendre audit deuxième élément de support (43) respectivement à ladite plaque d'appui inférieure (40) une position de retrait telle que l'extrémité avant de la portion antérieure (40B) de la plaque d'appui inférieure soit en arrière de la plaque d'appui arrière verticale (34) et une position avancée telle que ladite extrémité avant soit placée sous l'objet à saisir, ladite pince comprenant en outre un quatrième dispositif d'actionnement (21) fixé audit premier élément support, apte à maintenir ou relâcher une extrémité de l'objet durant le fonctionnement de ladite pince.

2. Pince de saisie et de transfert selon la revendication 1, caractérisée en ce que ledit premier dispositif d'actionnement et/ou ledit deuxième dispositif d'actionnement et/ou ledit troisième dispositif d'actionnement et/ou le quatrième dispositif d'actionnement sont des vérins pneumatiques à double effet.

3. Pince de saisie et de transfert selon la revendication 1, caractérisée en ce que ladite plaque d'appui arrière verticale comporte une ouverture (34A) dirigée vers le bas pour laisser passer la portion avant de la plaque d'appui inférieure.

4. Pince de saisie et de transfert selon l'une des revendications précédentes, caractérisée en ce que la distance verticale entre la face inférieure de la plaque d'appui supérieure horizontale et l'extrémité inférieure de la plaque d'appui arrière verticale est supérieure à la hauteur de l'objet à saisir.

5. Pince de saisie et de transfert selon la revendication 4, caractérisée en ce qu'elle est apte à créer un enfoncement (52) à proximité de la face inférieure de l'objet à saisir, par appui de l'extrémité inférieure de la plaque d'appui arrière verticale, ledit enfoncement étant suffisant pour permettre le passage de l'extrémité avant de la portion antérieure de la lame d'appui inférieure sous l'objet à saisir.

6. Pince de saisie et de transfert selon la revendication 5, caractérisée en ce qu'elle comprend en outre un racleur (36) constitué d'une plaque verticale coulissant librement dans des glissières (34B) aménagées dans ladite plaque d'appui arrière verticale, la position relative dudit racleur par rapport à la plaque d'appui arrière verticale étant contrôlée par un détecteur de position (37).

7. Pince de saisie et de transfert selon la revendication 6, caractérisée en ce que lorsque la plaque d'appui inférieure est entièrement retirée en arrière, la plaque d'appui arrière verticale et le racleur peuvent être abaissés afin de pousser vers l'avant l'objet à saisir.

8. Pince de saisie et de transfert selon l'une des revendications précédentes, caractérisée en ce qu'elle est utilisée pour la saisie et le transfert d'un objet unique.

9. Pince de saisie et de transfert selon l'une des revendications 1 à 8, caractérisée en ce qu'elle est disposée sur une ligne comportant une pluralité desdites pinces, aptes à saisir et transférer simultanément une rangée d'objets.

10. Pince de saisie et de transfert selon la revendication 9, caractérisée en ce qu'elle est montée sur un dépalettiseur (1) d'étiquettes de paquets de produits de l'industrie du tabac.

11. Pince de saisie et de transfert selon la revendication 10, caractérisée en ce qu'elle est commandée automatiquement par un dispositif de commande dudit dépalettiseur.

## Patentansprüche

1. Greif-und Uebertragungszange (2), die auf einer Handhabungsvorrichtung (1) von Gegenständen (50) angebracht ist, welche ein erstes Tragelement (20), das an einem bewegbaren Wagen (12) der genannten Handhabungseinrichtung befestigt ist, umfasst, wobei ein vorderer Teil (3) und ein hinterer Teil (4) der Zange am genannten ersten Tragelement befestigt sind, dadurch gekennzeichnet, dass der vordere Teil der Zange eine obere horizontale Abstützplatte (30), welche sich in Richtung des zu ergreifenden Gegenstandes (50) ausdehnt, und eine hintere vertikale Abstützplatte (34) umfasst, welche senkrecht am hinteren Teil der genannten oberen horizontalen Abstützplatte befestigt ist und sich gegen den unteren Teil des zu ergreifenden Gegenstands erstreckt, wobei die genannten obere horizontale und hintere vertikale Abstützplatten in vertikaler Richtung (Achse Z) bewegbar sind und auf einer ersten Betätigungsvorrichtung (31) angeordnet sind, deren Gehäuse am ersten Tragelement befestigt ist, und der hintere Teil der Zange eine Gleitschiene (44) enthält, welche in Richtung des zu ergreifenden Gegenstandes ausgerichtet ist (Achse X), und welche am genannten ersten Tragelement hinter der ersten Betätigungsvorrichtung befestigt ist, dass ein zweites Tragelement (43) entlang der genannten Gleitschiene unter der Wirkung einer zweiten Betätigungsvorrichtung (46) gleitbar ist, deren Gehäuse am genannten ersten Tragelement befestigt ist, dass eine untere Abstützplatte (40) vorgesehen ist, welche einen vorderen Teil (40B), der sich in Richtung zum zu ergreifenden Gegenstand erstreckt, und einen hinteren Teil (40A) in der Verlängerung des genannten vorderen Teils umfasst, dass die genannte untere Abstützplatte auf einer horizontalen Drehachse (42) angebracht ist und zwischen den genannten vorderen und hinteren Teilen angeordnet ist, und welche horizontale Achse auf einem Bügel (41) befestigt ist, welcher vertikal angeordnet und am genannten zweiten Tragelement befestigt ist, dass ein Gehäuse einer dritten Betätigungsvorrichtung (47) vor dem genannten Bügel am genannten zweiten Tragelement befestigt ist, welche genannte dritte Betätigungsvorrichtung auf den genannten hinteren Teil der unteren Abstützplatte wirkt, um diese um die genannte horizontale Achse zu drehen und diese eine quasi horizontale Lage oder eine mehr geneigte Lage einnehmen zu lassen, dass die genannte zweite Betätigungsvorrichtung (46) erlaubt, dass das genannte zweite Tragelement (43) bzw. die genannte untere Abstützplatte (40) eine Rückzugposition einnehmen kann, so dass das vorderste Ende des vorderen Teils (40B) der unteren Abstützplatte hinter der hinteren vertikalen Abstützplatte (34) zu liegen kommt, und eine vorgerückte Position einnehmen kann, so dass das genannte vorderste Ende unter dem zu ergreifenden Gegenstand plaziert ist, dass die genannte Zange ausserdem eine vierte Betätigungsvorrichtung (21) enthält, welche am genannten ersten Tragelement befestigt ist, welche fähig ist, ein äusserstes Ende des Gegenstandes während der Tätigkeit der genannten Zange festzuhalten oder freizulassen.

2. Greif- und Uebertragungszange nach Anspruch 1, dadurch gekennzeichnet, dass die genannte erste Betätigungsvorrichtung und/oder die genannte zweite Betätigungsvorrichtung und/oder die genannte dritte Betätigungsvorrichtung und/oder die vierte Betätigungsvorrichtung doppeltwirkende pneumatische Zylinder sind.

3. Greif- und Uebertragungszange nach Anspruch 1, dadurch gekennzeichnet, dass die genannte hintere vertikale Abstützplatte eine Oeffnung (34A) umfasst, welche gegen unten gerichtet ist, um den vorderen Teil der unteren Abstützplatte durchfahren zu lassen.

4. Greif- und Uebertragungszange nach einem der vorhergehenden Ansprüche, dadurch gekennzeichnet, dass der vertikale Abstand zwischen der unteren Fläche der oberen horizontalen Abstützplatte und dem untersten Ende der hinteren vertikalen Abstützplatte grösser als die Höhe des zu ergreifenden Gegenstandes ist.

5. Greif- und Uebertragungszange nach Anspruch 4, dadurch gekennzeichnet, dass diese fähig ist, eine Vertiefung (52) nahe der unteren Fläche des zu ergreifenden Gegenstandes mit Hilfe des untersten Endes der hinteren vertikalen Abstützplatte zu erzeugen, wobei die genannte Vertiefung ausreichend ist, um den Zugang des vordersten Endes des vorderen Teils des Blattes der unteren Abstützung unter den zu ergreifenden Gegenstand zu erlauben.

6. Greif- und Uebertragungszange nach Anspruch 5, dadurch gekennzeichnet, dass sie ausserdem einen Abstreifer (36) enthält, welcher aus einer in Gleitführungen (34B), welche in der genannten hinteren vertikalen Abstützplatte angebracht sind, frei verschiebbaren vertikalen Platte besteht, wobei die relative Position des genannten Abstreifers bezüglich der genannten hinteren vertikalen Abstützplatte durch einen Stellungssensor (37) kontrollierbar ist.

7. Greif- und Uebertragungszange nach Anspruch 6, dadurch gekennzeichnet, dass, während die untere Abstützplatte vollständig nach hinten zurückgezogen ist, die hintere vertikale Abstützplatte und der Abstreifer abgesenkt werden können, um gegen den Vorderteil des zu ergreifenden Gegenstandes zu stossen.

8. Greif- und Uebertragungszange nach einem der vorhergehenden Ansprüche, dadurch gekennzeichnet, dass diese zum Ergreifen und zum Uebertragen eines einzigen Gegenstandes verwendbar ist.

9. Greif- und Uebertragungszange nach einem der Ansprüche 1 bis 8, dadurch gekennzeichnet, dass sie in einer Linie angeordnet ist und mehrere der genannten Zangen umfasst und dadurch fähig ist, gleichzeitig eine Reihe von Gegenständen zu ergreifen und zu übertragen.

10. Greif- und Uebertragungszange nach Anspruch 9, dadurch gekennzeichnet, dass sie in einer Depalettisiervorrichtung (1) zur Etikettierung von Paketen der Tabakindustrie angeordnet ist.

11. Greif- und Uebertragungszange nach Anspruch 10, dadurch gekennzeichnet, dass sie automatisch durch eine Steuereinrichtung der genannten Depalettisiervorrichtung steuerbar ist.

## Claims

1. Grasping and transfer gripper (2) intended to be mounted on a materials handling apparatus (1) for objects (50), having a first support element (20) fixed to a mobile carriage (12) of the said materials handling apparatus, a forward portion (3) and a rearward portion (4) of the gripper being fixed to the said first support element, characterized in that the forward portion of the gripper includes a horizontal upper pressing plate (30) extending in the direction of the object to be grasped (50), a vertical rear pressing plate (34), fixed perpendicularly to the rearward portion of the said horizontal upper pressing plate and extending towards the bottom of the object to be grasped, the said horizontal upper and vertical rear pressing plates being movable in the vertical direction (Z axis), being mounted on a first actuating means (31) whose casing is fixed to the said first support element, the rearward portion of the gripper comprising a slide rail (44) oriented in the direction of the object to be grasped (X axis), fixed to the said first support element behind the said first actuating means, a second support element (43) sliding along the said slide rail under the action of a second actuating means (46) whose casing is fixed to the said first support element, a lower pressing plate (40) having a forward portion (40B) extending in the direction of the object to be grasped and a rearward portion (40A) in the prolongation of the said forward portion, said lower pressing plate being mounted on a horizontal pivot pin (42) disposed between the said forward and rearward portions, said horizontal pin being fixed to a stirrup piece (41) disposed vertically and fixed to the said second support element, the casing of a third actuating means (47) being fixed to the said second support element behind the said stirrup piece, the said third actuating means acting upon the said rearward portion of the lower pressing plate so as to make it pivot about the said horizontal pin and so that a substantially horizontal position or a more inclined position is assumed, the said second actuating means (46) permitting the said second support element (43), respectively the said lower pressing plate (40), to assume a retracted position such that the front end of said forward portion (40B) of the lower pressing plate is behind said vertical rear pressing plate (34), and an advance position such that said front end is situated beneath the object to be grasped, the said gripper comprising moreover a fourth actuating means (21) fixed to the said first support element, capable of holding or releasing one end of the object during operation of the said gripper.

2. Grasping and transfer gripper according to claim 1, characterized in that the said first actuating means and/or the said second actuating means and/or the said third actuating means and/or the said fourth actuating means are double-acting pneumatic jacks.

3. Grasping and transfer gripper according to claim 1, characterized in that the said vertical rear pressing plate includes a downwardly directed aperture (34A) for accomodating the forward portion of the lower pressing plate.

4. Grasping and transfer gripper according to one of the preceding claims, characterized in that the vertical distance between the underside of the horizontal upper pressing plate and the lower end of the vertical rear pressing plate is greater than the height of the object to be grasped.

5. Grasping and transfer gripper according to claim 4, characterized in that it is capable of creating a recess (52) close to the underside of the object to be grasped for resting the lower end of the vertical rear pressing plate, the said recess being sufficient to permit passage of the front end of the forward portion of the lower pressing strip <sic. plate> under the object to be grasped.

6. Grasping and transfer gripper according to claim 5, characterized in that it comprises moreover a scraper (36) composed of a vertical plate sliding freely in slide rails (34B) provided in the said vertical rear pressing plate, the relative position of the said scraper in relation to the vertical rear pressing plate being checked by a position detector (37).

7. Grasping and transfer gripper according to claim 6, characterized in that when the lower pressing plate is fully retracted, the vertical rear pressing plate and the scraper can be lowered in order to push against the front of the object to be grasped.

8. Grasping and transfer gripper according to one of the preceding claims, characterized in that it is used for grasping and transferring a single object.

9. Grasping and transfer gripper according to one of the claims 1 to 8, characterized in that it is disposed in a line comprising a plurality of said grippers capable of grasping and transferring a row of objects simultaneously.

10. Grasping and transfer gripper according to claim 9, characterized in that it is mounted on a depalletizer (1) of blanks for products of the tobacco industry.

11. Grasping and transfer gripper according to claim 10, characterized in that it is controlled automatically by a control means of the said depalletizer.
